(19) Europäisches Patentamt
European Patent Office
Office européen des brevets

(11) Publication number: **0 206 516 A2**

# (12) EUROPEAN PATENT APPLICATION

(21) Application number: **86303840.2**

(22) Date of filing: **21.05.86**

(51) Int. Cl.4: **H 01 F 1/28**, H 01 F 1/37

(30) Priority: **09.09.85 US 773627**
**21.05.85 US 736388**

(43) Date of publication of application: **30.12.86 Bulletin 86/52**

(84) Designated Contracting States: **AT BE CH DE FR GB IT LI LU NL SE**

(71) Applicant: **Ferrofluidics Corporation, 40 Simon Street, Nashua New Hampshire 03061 (US)**

(72) Inventor: **Borduz, Lucian, 68 Squire Drive Nashua, New Hampshire (US)**
Inventor: **Kuldip, Raj, 11 Christina Road Merrimack, New Hampshire 03061 (US)**
Inventor: **Gowda, Hanumaiah L., 30 Congress Street Nashua, New Hampshire 03061 (US)**

(74) Representative: **Slight, Geoffrey Charles et al, Graham Watt & Co. Riverhead, Sevenoaks Kent TN13 2BN (GB)**

## (54) Ferrofluid composition, method of making, and apparatus and method using same.

(57) A stable ferrofluid composition and a method of preparing and using the ferrofluid composition, and a ferrofluid seal apparatus is described. The ferrofluid composition comprises a liquid carrier, ferromagnetic particles sufficient to provide magnetic properties to the ferrofluid dispersed in the liquid carrier and a dispersing amount of a cationic surfactant to provide a stable ferrofluid composition. The stable ferrofluid compositions have improved electrical conductivity and are useful, e.g. in sealing computer disc drives. Thus, an electrically conductive ferrofluid-film-bearing apparatus and seal apparatus (40) for a shaft (46) employs a low-viscosity, electrically conductive ferrofluid composition (62, 50) as an O-ring seal and as a ferrofluid bearing surrounding shaft (46) which composition comprises a liquid carrier, and contains in combination an electrically conductive amount of a cationic surfactant and dispersed carbon particles, to obtain a low-electrical-resistivity ferrofluid having a low viscosity.

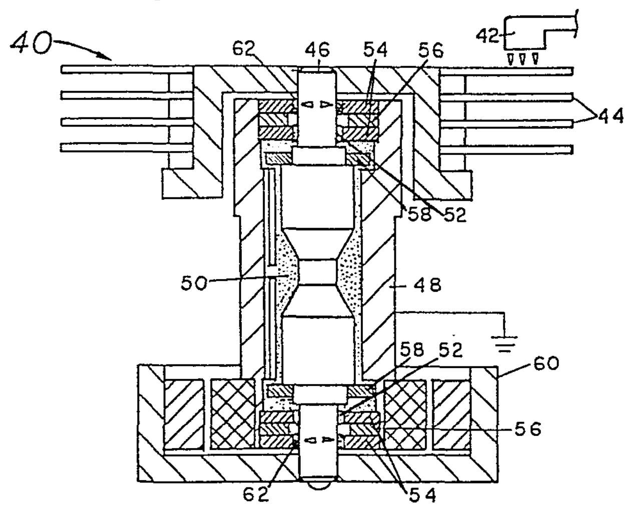


EP 0 206 516 A2

Ferrofluids or magnetic colloids are liquids with magnetic properties in which ferromagnetic materials are colloidally suspended. Such ferrofluids or magnetic liquids must show a high degree of stability (gravitational and magnetic field) in order to perform well in various commercial devices and be responsive to external magnetic fields. Generally a stable magnetic colloid or ferrofluid in a high magnetic field gradient requires small ferromagnetic particles of generally less than 100 angstroms in diameter. The ferromagnetic particles are typically coated with one or several separate layers of surfactants to prevent agglomeration in any particular liquid carrier.

Ferrofluids are widely known and used, and typical ferrofluid compositions are described, for example, in U.S. Patent 3,700,595, issued October 24, 1972, wherein anionic surfactants, such as fatty acids, alcohols, amines or amids and other organic acids are employed as dispersing surface active agents; U.S. Patent 3,764,504, issued October 9, 1973, wherein aliphatic monocarboxylic acids are employed as dispersing agents; U.S. Patent 4,208,294, issued June 17, 1980, wherein a water based magnetic liquid is produced by the employment of $C_{10}$ to $C_{15}$ aliphatic monocarboxylic acids as acid dispersing agents; and U.S. Patent 4,430,239, issued February 7, 1984, wherein a stable ferrofluid composition is provided employing a phosphoric acid ester of a long-chain alcohol as a surfactant.

Various processes have been described for preparing magnetic colloids and ferrofluids, such as described more particularly in U.S. Patent 3,917,538, issued

November 4, 1975, which provides a process for preparing an irreversibly flocked magnetic particle through the use of different dispersing agents which includes a variety of nonionic and anionic surfactants, such as various petroleum sulfonates as the anionic surfactants and wherein the ferrofluids are prepared employing a grinding or ball mill technique; U.S. Patent 4,019,994, issued April 26, 1977, which employs a petroleum sulfonate with an aqueous carrier; U.S. Patent 4,356,098, issued October 26, 1982, which describes ferrofluid compositions composed of silicone-oil carrier and a dispersing amount of an anionic surfactant which forms a chemical bond with the surface of the magnetic particles as a tail group compatible or soluble in the silicone-oil carrier; and U.S. Patent 4,485,024, issued November 27, 1984, wherein a ferrofluid is produced through controlling the pH of the aqueous suspension of the ferromagnetic particles of an organic solvent together with surface active agents, such as fatty carboxylic acids.

A properly stabilized ferrofluid composition typically undergoes practically no aging or separation, remains liquid in a magnetic field and after removing of the magnetic field shows no hysteresis. Such a stabilized ferrofluid exhibits stability by overcoming generally three principal attractive forces: van der Waals, interparticles - magnetic and gravitational forces. The average particle needed in a ferrofluid depends on the selection of the ferromagnetic materials and typically may range from 20 to 300Å, for example 20 to 200Å, and for use in a very high magnetic field gradient may range up to 100Å in diameter. Typically, the ferromagnetic particles must be covered by one or more layers of the selected

surfactant in order to provide stability in an exterior magnetic field gradient. While there are many known ways to obtain small particles of the ferrites, cobalts, irons and other ferromagnetic particles, the type of surfactant and dispersing agent needed to stabilize these particular particles is an important aspect of the formation of stable ferrofluid compositions and the method of preparing such compositions.

The ferrofluid compositions have been used in a wide variety of commercial applications, such as for ferromagnetic seals, as dampening liquids in inertia dampers, as heat transfer liquids in the voice coil of loudspeakers, as bearing liquids, as ferrolubricants, for domain detection, for oil prospecting, and other applications.

From one aspect, the present invention relates to stable ferrofluid compositions and to a method of making and using such stable ferrofluid compositions. The stable ferrofluid composition employs a cationic surfactant as a dispersing agent in an organic carrier liquid. The stable ferrofluid compositions also exhibit an improvement in electrical conductivity.

It has been discovered that a stable ferrofluid composition may be prepared by employing a cationic surfactant as the dispersing agent for the ferromagnetic particles in the ferrofluid composition. One class of cationic surfactants so employed is composed of a quaternary ammonium surfactant wherein a head portion of the molecule is a quaternary ammonium and a tail or other portion of the cationic surfactant molecule is soluble in or compatible with the organic liquid carrier

of the ferrofluid composition. It has been unexpectedly found that the employment of quaternary ammonium type cationic surfactants permits the preparation of stable ferrofluid compositions, in particular stable ferrofluid compositions of enhanced electrical conductivity. Such ferrofluid compositions are particularly useful where it is necessary to conduct an electrical charge or current from a rotary to a stationary member, or vice versa. Thus, the ferrofluid compositions not only provide for a ferrofluid sealing, dampening or other functioning, but also permit the use of these ferrofluid compositions in applications where transport of electric charge is required along with sealing or other functions. Generally non-aqueous or oil-base ferrofluid compositions of the prior art exhibit very high resistivities in the range of $10^{10}$ or $10^9$ ohm-cm and are basically dielectrics. Therefore, improved conductivity of ferrofluids particularly useful in ferrofluid seals for use in the computer seals and semi-conductive seal applications, such as computer disk drives where static charges are accumulated at the disk or which can be grounded through a conductive ferrofluid, are desirable.

In the prior art, ferrofluid compositions have employed anionic-type surfactants as surface active or dispersing agents. Typically a fatty acid, such as an oleic acid, is used as a most common example, while some prior art ferrofluid compositions use other anionic surfactants or nonionic surfactants. Generally the use of surfactants with COOH, $-SO_3H$, $-PO_3H_2$ groups has been considered to be the most effective polar groups in anionic surfactants for use in preparing ferrofluid compositions. These and other anionic

surfactants are employed because it is considered that the ferromagnetic particles were considered to be positively charged, and thus were able to retain the anionic surfactants to form stable ferrofluids. However, it has been discovered that cationic surfactants, and more particularly quaternized ammonium surfactant agents, may be employed as dispersing agents to prepare a very stable ferrofluid composition, and which compositions also exhibit, improved generally by a factor of 10, electrical conductivity. The absorption of surfactants on the surface of ferromagnetic particles is a very complex surface phenomenon, so that the bonding between the ferromagnetic particles and the surface cannot be fully explained, though consideration such as electrostatic considerations and other types of bonding are possibly involved.

The stable ferrofluid compositions of the invention comprise: an organic liquid carrier; ferromagnetic particles in an amount sufficient to impart magnetic characteristics to the ferrofluid composition; and a dispersing amount of a quaternary ammonium surface active agent as a dispersing agent, and which quaternary ammonium surface active agent comprises a quaternary ammonium head portion and a long tail portion, which tail portion is soluble in or compatible with the organic liquid carrier selected. The stable ferrofluid compostitions of the invention are usefully employed in all of those ferrofluid applications where ferrofluids are typically employed, and particularly in computer disk drive seals or in RF or DC sputtering apparatus where the transport of electrical charge through electrically conductive ferrofluid is an additional advantage.

The liquid carrier employed in preparing the ferrofluid composition of the invention may be any type of an organic liquid carrier, such as and not limited to: hydrocarbons; esters; fluorocarbons; silicones; mineral oils; polyphenyl ethers; polyglycols; fluorosilicone esters; polyolesters; glycol esters; and various other liquids, such as for example an ester based oil liquid or a polyalphaolefin base. The carriers can be oils or lubricants with molecular weight of about 80 to 700. Typically the organic liquid carriers are stable, nonvolatile liquids. The liquid carriers employed may contain or have various additives, such as stabilizers, antioxidants, corrosion inhibitors, viscosity index additives, or minor amounts of other additives to improve a selected quality or property of the composition.

The magnetic particles employed in the ferrofluid compositions may be those magnetic type of particles commonly employed in preparing ferrofluid compositions and typically comprise finely divided single domain particles of ferromagnetic materials, such as, but not to be limited to: magnetite; ferrites; iron; nickel; cobalt; metal carbides or metal oxides; metal alloys; and other finely divided materials which have or can be made to have magnetic properties when dispersed in a liquid carrier. One typical and preferred ferromagnetic particle comprises magnetite particles. The ferromagnetic particles employed are finely divided and are generally less than 1000 angstroms, but more typically less than 300 angstroms, such as for example about 20 to 200 angstroms in single domain particles.

The ferromagnetic particles of the ferrofluid composition are dispersed and stabilized through the employment

of a cationic surfactant, i.e. having a positive charge. The amount and nature of the cationic surfactant employed as a dispersing agent may vary depending on the particular liquid carrier, the ferromagnetic particles and the size thereof, and the type of stability and dispersion desired. The ratio of the cationic surfactant as a dispersing agent to the ferromagnetic particles may vary, but generally in ferrofluid compositions ranges from about 0.5:1 to 20:1 by weight. The ferromagnetic particles are generally present in the ferrofluid composition in an amount ranging from about 5 to 20 percent by weight of the liquid carrier. The ferrofluid compositions prepared in accordance with the invention have varying saturization, magnetization values and typically range from 20 gauss to 900 gauss, for example 100 to 450 gauss, and range in viscosity from about 25 cp to 2000 cp, or typically 50 to 500 cp.

The cationic surfactants are composed of quaternary ammonium surfactant molecules, generally with two structural parts, a polar head group comprising the quaternary ammonium which attaches to the ferromagnetic particle surface or to a layer of another surfactant, and a tail group with properties similar to the surrounding fluid matrix or the carrier fluid, and typically being compatible with and soluble in the organic liquid carrier. Therefore, the selection of the particular tail group of the quaternized ammonium surfactant should be matched with the particular organic liquid carrier employed, for example a hydrocarbon tail group of a quaternized ammonium compound would typically be soluble in hydrocarbon oil or polyalphaolefine nonpolar-type organic liquid carriers, while tail groups having a hydroxyl or an oxygen-containing tail,

e.g. OH groups, would be soluble and compatible in glycols, polyglycols, esters, esterglycols and the like. For example, a polyalkylene oxide, such as a polypropylene oxide tail group of a quaternized ammonium cationic surfactant is typically soluble in a polar organic liquid carrier, such as esters, polyesters, polyglycols or glycolesters. The employment of cationic surfactants as dispersing agents permits the dispersing of ferromagnetic particles in an entirely new family of organic liquid carriers or lubricants, such as polyolesters, glycols, silahydrocarbons and various other organic liquid carriers which may be used as oils, lubricants, bearing fluids and the like. Cationic surfactants of the invention which are insoluble in water also allow the possibility of making ferrofluid compositions of magnetic colloids compatible with water or alcohols. The ferrofluids employing the cationic surfactants may be used in all known applications of ferrofluids, such as in sealing, dampening, lubrication, heat transfer, domain detection, bearing fluids, and in other applications.

A wide variety of cationic surfactants may be employed as the dispersing agent of the invention where the tail portion of the surfactant molecule is soluble in or compatible with the carrier liquid, and in addition is of sufficient length in order to provide a stable ferrofluid composition, for example, typically the length of the molecular structure of the tail portion of the cationic surfactant should be more than about 20 angstoms to stabilize particles having a diameter of about 100 angstroms or more. The particularly preferred cationic surfactants of the invention comprise the quaternary ammonium cationic surfactant composed of a

quaternary ammonium head group and a long tail portion, such as for example ranging in each surfactant molecule from about 10 to 50 angstroms in overall length or having $C_6$-$C_{30}$, e.g. $C_8$-$C_{18}$, carbon atoms or length.

Some quaternary ammonium cationic surfactants useful as dispersing agents in the ferrofluid composition would comprise, but not be limited to the following representative classes such as: quaternary imidazoline salts which contain a heterocyclic ring which contains a quaternary ammonium group and includes a long chain, such as a fatty acid substituent group; aliphatic quaternary ammonium salts where at least one of the groups and often two of the groups through the quaternary ammonium and nitrogen comprises a long chain group, such as a fatty acid group; and quaternary acylated polyamine salts which contain, for example, a long chain alkoxy group such as an ethoxy or propoxy group, which compounds are particularly useful as dispersing agents where the liquid carrier comprises an oxygen-containing liquid, such as an ester, glycol or polyester. The cationic surfactant should be employed in an amount sufficient to provide for a stable dispersion, and may be used alone or in combination with other surfactants, such as nonionic surfactants (but not directly with anionic surfactants), and with other various additives or used in combination.

The structural formulas of representative cationic surfactants used in the invention are as follows:-

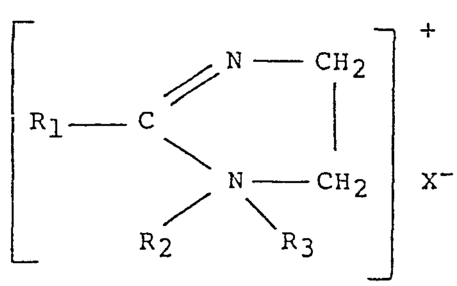

I

Wherein $R_1$ is a long chain aliphatic, or alicyclic radical or aryl, or alkyl-aryl radical, such as a monocarboxylic acid particularly a long chain $C_8$-$C_{18}$ fatty acid radical like oleic, stearic, myristic, lauric, etc. or a mixture thereof; $R_2$ and $R_3$ are hydrogen or alkyl, such as $C_1$-$C_4$ like methyl, or hydroxy-containing $C_2$-$C_6$ alkyl like $-C_2H_4OH$ radicals. A representative compound would be whereas $R_1$ is a mixture of $C_{12}$-$C_4$ fatty acids, $R_2$ and $R_3$ are $CH_3$ radicals, and X is acetate or Cl.

$$\left[ R_1 - \overset{\displaystyle R_4}{\underset{\displaystyle R_3}{\overset{|}{\underset{|}{N}}}} - R_2 \right]^{+} X^{-}$$

II

Wherein $R_1$ is a radical as in formula I, $R_2$ and $R_3$ are poly alkoxy radicals, such as polypropyloxyenated and polyethoxylated radicals, and $R_4$ is a lower alkyl such as methyl radical. A representative compound would be where $X^-$ is an acetate or Cl, $R_4$ is $CH_3$, and $R_2$ and $R_3$ are polyoxypropylenated radicals of 1 to 10 propoxy groups.

$$\left[ C_nH_{2n+1}CONH(CH_2)_3HN(CH_3)_2 \right]^{+} X^{-}$$

III

Wherein n is a number from 1 to 20, e.g. 6 to 15. A representative compound would be where $X^-$ is acetate or Cl and n is 3 to 8. In all the formulas $X^-$ represents a cationic salt radical, such as a halide like chloride, a nitrate, a sulfate, a phosphate, or weak organic acid like an acetate radical.

The ferrofluid composition may be prepared employing the usual and generally accepted techniques of ball milling

and grinding, as in the prior art, to prepare the ferrofluid compositions. The cationic surfactants may be used in conjunction with anionic and nonionic surfactants or may be used as one surfactant layer; while other surfactants, anionic, nonionic or other cationic surfactants, may be used in another layer or to complete the first layer. For example, the ferromagnetic particles may be dispersed first with an anionic surfactant, and then a separate surfactant to complete the layer or as a second layer of a cationic surfactant is employed, or vice versa, to provide stable ferrofluid compositions. The techniques for such multiple layer dispersing of magnetic particles is known in the art for anionic surfactants. Thus, the stable ferrofluid composition may comprise cationic surfactants together with other surfactants, typically a first dispersing layer of an anionic fatty acid surfactant followed by a final dispersing of the anionic surfactant magnetic particles with a cationic surfactant.

The ferrofluid compositions employing the quaternary ammonium surfactants as dispersing agents also provide for improved electrical conductivity over the usual nonionic or anionic dispersing agents. Typically the resistivity is in the range of $10^6$ ohm-cm or less, so that a properly designed ferrofluid seal employing the ferrofluid composition may have a resistance of about $10^5$ ohms or less. The electrically conductive ferrofluid may be used in disk drive applications to provide the conventional sealing function, and further for the conduction of electrical charge, thereby eliminating the grounding silver graphite button presently employed in spindles. The ferrofluids are particularly useful in a rotating computer disk drive spindle wherein static

charge is produced to the disk, and which charge build-up can lead to a spark within the disk in the magnetic head located within 15 microinches of the disk. Such static spark may locally damage the alignment of meteor particles resulting in the loss of information. However, by grounding the computer disk drive spindle and employing the electrically conductive ferrofluid composition containing the quaternary ammonium surfactant, it is possible to avoid sparking.

EP-A-86 30 2048.3 is directed to an electrically conductive ferrofluid composition, which composition comprises a liquid carrier, magnetic particles to impart magnetic properties, electrically conductive carbon particles in an amount to provide electrically conductive properties to the ferrofluid composition, and a dispersing agent in an amount sufficient to disperse and to stabilize the magnetic electrically conductive particles in the liquid carrier. Typically, the carbon particles are present in an amount of from about 1% to 25% by weight of the composition, while the dispersing agent comprises an anionic surfactant, and with the carbon particles having an average particle size of about 20 to 300 Angstroms, and an aggregate particle size of up to about 1 mm. The electrically conductive ferrofluid composition is disclosed as being usefully employed

in a ferrofluid seal about a rotating-shaft member which may be subject to the accumulation of static charges, such as the rotating-shaft member of a computer-disc-drive apparatus. The electrically conductive ferrofluid composition is characterized by an electrical resistivity of about $10^3$ ohms per centimeter or less. Typically, the electrically conductive ferrofluid composition is employed in first, second or multiple radial gaps formed by an annular permanent magnet and one or more pole pieces, in combination with a conductive means, to conduct the electrical charges from the electrically conductive ferrofluid in the seal gap to the ground.

From a further aspect, the present invention relates to electrically conductive ferrofluid bearing and seal apparatus and low-viscosity electrically conductive ferrofluid used therein. The ferrofluid composition comprises a liquid carrier, ferromagnetic particles to provide magnetic properties, and a

dispersing amount of a cationic surfactant, to disperse the ferromagnetic particles and also to provide improved electrical conductivity to the ferrofluid composition. Typically, the cationic surfactant employed is composed of a cationic, positively charged portion; for example, a nitrogen atom, and a long-chain portion; for example, a hydrocarbon, with the long-chain portion compatible with or soluble in the organic liquid carrier used in the ferrofluid composition. Generally, the cationic surfactant is present in a ratio by weight of surfactant to magnetic particles of from about 1:1 to 20:1, while the organic liquid carrier may comprise a variety of materials, such as hydrocarbons, polyalpha olefins or other liquid nonvolatile carriers. The organic liquid carrier also may comprise an ester glycol, particularly where the cationic surfactant comprises a polyalkyloxylate portion, such as a polyethoxylate or polypropoxylate portion. Typically, the cationic surfactant is selected from a quaternary-ammonium surfactant which comprises a fatty-acid quaternary imidazole salt, a polyprooxy quaternary-ammonium salt or a cessalated polypropylene salt or combinations thereof. The stable ferrofluid compositions are usefully employed in computer-disc-drive applications, to provide the conventional sealing function and further for the conduction of electrical charges, so as to prevent charge buildup.

Ferrofluid is typically employed in hydrodynamic bearings as a bearing fluid and often in combination of ferrofluid bearing-seal arrangements. One ferrofluid-film-bearing embodiment used commercially in computer-disc-drive applications is where the ferrofluid is employed both as a fluid bearing and as a seal, in connection with a ferrofluid seal apparatus at each end of the bearing. The main components of a ferrofluid-film-bearing device employed in the computer-disc drives comprises a radial bearing, a pair of thrust bearings and usually two ferrofluid seal apparatuses at one or each end of the bearing cavity, to retain the ferrofluid within the bearing cavity (see, for examle, U.S. Patent 4,526,484, issued July 2, 1985).

In computer-disc-drive applications, the speed of the bearing is or approaches 3600 rpms, which may be accomplished with the use of an in-line motor.

The radial clearance in the bearing varies, but generally may be up to 0.6 mil, and the bearing may be a three- or four-sector bearing assembly.

The advantages of such a bearing assembly, over conventional ball-bearing-spindle assemblies, are extremely low nonrepetitive runout, damping and quietness of operation. The ferrofluid-film-bearing spindle in the bearing assembly, however, needs to be grounded in computer-disc-drive and other applications, since the rotating disc-drive shaft accumulates electrical charges, and, consequently, a potential difference is produced between the head of the computer disc drive and the disc. This accumulated charge on the rotating disc shaft must be grounded, in order to avoid a spark which may damage the disc or the magnetic head, with the consequent loss of information on the disc. Generally, a grounding scheme is used, wherein a grounding button is employed in contact with the shaft, to conduct built-up static charges to ground. The grounding button, however, is not fully satisfactory, since it tends to generate particles in use, produces noise, wears with time, adds a new component into the bearing and seal device, and makes the resulting bearing seal assembly more expensive and unreliable with time.

Further, in the operation of a ferrofluid bearing, the ferrofluid composition employed needs to be a low-viscosity ferrofluid composition, such as a composition having a viscosity of less than 50 cps at 27°C or more typically 25 cp ~~to~~ or 15 cp or less. Low-viscosity ferrofluid compositions suitable for use would be an ester-based ferrofluid having a 200-gauss magnetization and a viscosity of 15 cps at 27°C. A low-viscosity ferrofluid provides for a low power consumption for the bearing assembly, and a small temperature rise, ~~maximizing~~ minimizing the thermal expansion of the components in the bearing assembly, thereby ~~minimizing~~ maximizing bearing performance by such thermal expansion. A small temperature rise is further necessary in reducing the viscosity changes and, thus, not affecting the load-bearing characteristics and capabilities of the bearing assembly.

Therefore, it is desirable to provide for an electrically conductive bearing apparatus and for a low-viscosity electrically conductive ferrofluid composition for use in such bearing apparatus.

In its aspect now being described, the present invention concerns an electrically conductive ferrofluid bearing apparatus and low-viscosity, electrically conductive ferrofluid compositions for use in such bearing apparatus. In particular, this aspect of the invention relates to a ferrofluid bearing and seal apparatus, particularly useful for computer-disc drives in which the grounding button of the prior art has been eliminated, and in which a low-viscosity, electrically conductive, special ferrofluid composition is employed.

Thus, the present invention provides in its present aspect for a unique ferrofluid-film-bearing assembly which does not require a grounding button, and also for a unique composite ferrofluid-film-bearing and seal assembly, both particularly useful for the application of computer-disc drives, and in which both apparatuses there are no grounding buttons required, eliminating the disadvantages associated with such prior-art grounding buttons. The ferrofluid bearing apparatus employs a unique low-viscosity, electrically conductive ferrofluid, typically having an electrical resistivity of about $10^{+2}$ ohm centimeters or less and a viscosity of about 50 cps at 27°C; for example, 25 cps or less.

The electrically conductive ferrofluid composition comprises a liquid carrier which contains magnetic particles, such as ferromagnetic particles, in a sufficient amount to provide for magnetic properties to the ferrofluid, the magnetic particles being dispersed in the liquid carrier, and also includes in combination an electrically conductive amount of a cationic surfactant, which acts both as the dispersing agent for the ferromagnetic particles and to provide electrically conductive properties to the ferrofluid composition. The ferrofluid composition may also include a controlled amount of dispersed carbon particles, such as finely-divided carbon-black particles, which, in combination with the cationic surfactant, provides for a low electrical resistivity.

The low-viscosity ferrofluid compositions employ only a small amount of finely-divided carbon particles; that is, generally up to about 4% by weight of the ferrofluid composition, and typically from about 0.1% to 4%; for example, 0.5% to 2.5%, and which carbon particles are added in a controlled amount, in order to

avoid a significant increase in the viscosity of the ferrofluid composition. The employment of small amounts of carbon particles into the ferrofluid composition, while it provides for a slight increase in viscosity, such as to about 25 to 50 cps, is still acceptable for ferrofluid compositions used in bearings, but the electrical conductivity is considerably and unexpectedly improved, in combination with the cationic surfactant, thereby eliminating the need for a separate grounding button in ferrofluid bearing apparatuses, when the low-viscosity, electrically conductive ferrofluid composition is employed. While the employment of carbon particles, dispersed in a ferrofluid composition is described in EP-A-86 30 2048.3, typically the amount of carbon particles employed for a seal may be considerably greater, leading to a thixotropic or thickened ferrofluid composition, which would be unacceptable for use in bearing assemblies for which the fluid can be used as it is without carbon particles.

In addition, while cationic surfactants are employed according to the present invention to provide a stable and electrically conductive ferrofluid compositions, the compositions are designed primarily for ferrofluid seal uses and good stability is desired.

Thus, ferrofluids based on cationic surfactants and the use of such surfactants provides for erosion resistance and provides an increase in electrical properties to the ferrofluid composition. It has been found that the electrical properties of the ferrofluid can be enhanced further by the combination of a colloidal suspension of fine carbon particles, together with a cationic surfactant, without resulting in a high-viscosity or thixotropic ferrofluid composition, which would be unacceptable for use in ferrofluid bearing apparatuses.

The low-viscosity, electrically conductive ferrofluid composition may be employed in prior-art bearing apparatuses, without the use of the spring-loaded grounding button, to conduct the accumulated static charge from the rotating, magnetically conductive shaft, since the substitution of the electrically conductive ferrofluid composition for the prior non-conductive ferrofluid or the prior non-conductive hydrodynamic bearing liquids prevents the accumulation of static charge through conducting the static charge through the electrically conductive ferrofluid composition and the shaft to the ground.

Alternatively, one or two separate ferrofluid seal apparatuses may be employed in a composite ferrofluid bearing and seal apparatus, employing conventional thixotropic conductive ferrofluid compositions, as EP-A-86 30 2048.3 for grounding purposes. The employment of one or two ferrofluid seals, such as to retain the low-viscosity ferrofluid or hydrodynamic liquid in the bearing cavity, introduces very small power consumption, even though a thixotropic or a high-viscosity ferrofluid composition is employed, and such compositions further aid in the retention of the ferrofluid in the bearing, by having a higher viscosity in the O-ring seal about the shaft.

Typically, the electrically conductive, low-viscosity ferrofluid composition used as a bearing fluid may be based on the same or a similar liquid carrier, as in the carrier employed in the ferrofluid seal, to ensure compatibility, although, if desired, but not recommended, noncompatible liquid carriers may be employed. It has been found that the low-viscosity, electrically conductive ferrofluid compositions useful in the bearing apparatus provide for resistivities as low as 50 ohms, such as, for example, as low as 10 or less ohms, since the large surface area of the bearing in the very small surface area of the radial gap in the seal apparatus contributes to low resistance. Where the low-viscosity ferrofluid compositions are employed in bearing assemblies, for use in computer-disc-drive applications, resistance values in the range of kilo ohms or $10^5$ ohms - cm or less are acceptable for grounding the accumulated static charge.

The low-viscosity ferrofluid compositions may comprise nonpolar organic liquid carriers, such as a hydrocarbon, or a polar organic liquid carrier, such as an ester, or even carriers such as water, glycol, esters and the like, and ferromagnetic particles in an amount sufficient to impart magnetic characteristics and properties to the ferrofluid composition, such as in an amount ranging from 5% to 20% by weight of the liquid carrier. The ferrofluid composition also includes a dispersing amount and an additional electrically conductive amount of a cationic surface-active agent, typically a quaternary-ammonium surface-active agent, as a dispersing agent. The magnetic particles employed are those magnetic-type particles commonly employed in preparing ferrofluid compositions, and may comprise finely-divided particles of

ferromagnetic material, such as, for example, magnetic particles having generally less than a 1000 Angstroms, and typically 20 to 200 Angstroms. The ratio of the ationic surfactant, as a dispersing agent, to the ferromagnetic particles varies, but generally is from 0.5:1 to 20:1 by weight.

In addition, the ferrofluid composition includes a finely-divided amount of carbon-black particles and typical furnace-type carbon-black particles up to about 4% by weight, which are dispersed in the liquid carrier, during the preparation of the ferrofluid, such as by ball-milling, dispersing, grinding or other grinding and milling techniques. A wide variety of cationic surfactants may be employed, but generally they are quaternary salts, such as the quaternary imidazole salts, and other quaternary-ammonium salts as already described.

While the ferrofluid compositions described are particularly useful because of their low viscosity in ferrofluid bearing apparatuses, such ferrofluid compositions also may be usefully employed in other applications, such as in ferrofluid seal apparatuses, where a low-viscosity, electrically conductive ferrofluid composition is useful. Generally, the ferrofluid compositions have varying saturation values, but generally from about 20 to 500 gauss, and more typically 100 to 400 gauss.

Some ways of carrying out the present invention in all of its aspects will now be described for the purposes of illustration only, and not by way of limitation, in connection with certain embodiments, and in its apparatus aspects, with reference to drawings:

In the drawings:

FIG. 1 is a schematic, illustrative representation of a ferrofluid bearing apparatus containing a low-viscosity, electrically conductive ferrofluid; and

FIG. 2 is a sectional, illustrative ferrofluid bearing apparatus containing electrically conductive ferrofluid, which includes a ferrofluid seal apparatus.

## DESCRIPTION OF THE EMBODIMENTS

### Example 1

### Using Quaternary Imidozoline Salts Cationic Surfactant

The magnetic ($Fe_3O_4$) was prepared using 240 grams of Fe $SO_4$, 425 ml of 45% Fe $Cl_3$ and 250 ml water. The mixture of these three components is maintained at $5^oC$ under constant agitation to assure that Fe $SO_4$ is completely dissolved.

$Fe_3O_4$ was precipitated from the solution by the slow addition of ammonia solution 30% $NH_3$ to reach the pH of 12. The solution must be cooled to $5^oC$ during $F_3O_4$ precipitation in order to reach average magnetic particles diameter in the range of 100 Å. At pH 12 and $5^oC$ the suspension is agitated for more than 30 minutes and then the temperature is increased to $90-100^oC$. This temperature is maintained for 60 minutes.

The precipitated $Fe_3O_4$ is magnetically separated from the salt/ammonia solution and is washed of salts using 500 ml of water. The operation is repeated 4 to 6 times. The magnetic particles are washed 2 to 4 times with acetone in order to remove as much of the water content as possible.

The magnetic particles are thoroughly dryed at 80°C in a vacuum oven by removing the acetone and traces of water. 10 grams of dryed $Fe_3O_4$ is added to a ball mill and mixed with 15-20 gm of a mixed fatty quaternary imidozoline salt as a cationic surfactant (Witcamine Al 42-12 of Witco Chemical Co.) and 200 ml of heptane. After 20 days of grinding the based heptane ferrofluid has a saturation magnetization of about 350 gauss.

The ferrofluid is mixed with a 200 ml of an organic liquid carrier such as a polyalphaolefine oil (<u>Emery 3002</u> a polyalphaolefine oil having a pour point of -55°C, flash point 155°C and viscosity index (ASTM D-1158) 122; and <u>Emery 3004</u> a polyalphaolefine oil having a pour point of -65°C, flash point 210°C and viscosity index (ASTM D-1158) 121; both products of Emery Industries). The suspension is heated at 110°C until all heptane has been evaporated.

The ferrofluid has a saturation on magnetization of 350 gauss and a viscosity of 20 to 40 cp (@ 27°C) depending on the type of polyalphaolefine oil used as that final carrier.

<u>Example 2</u>

<u>Using Polypropoxy Quaternary Ammonium Chloride Cationic Surfactant</u>

The magnetite ($Fe_3O_4$) was prepared using 240 grams of Fe $SO_4$, 425 ml of 45% Fe $Cl_3$ and 250 ml of water. The

mixture of these three components is maintained at 5°C under constant agitation to ensure that the Fe $SO_4$ is completely dissolved.

$Fe_3O_4$ was precipitated from the solution by the slow addition of ammonia solution (30% $NH_3$) to reach the pH of 12. The solution must be cooled at 5°C during $Fe_3O_4$ precipitation in order to obtain average magnetic particle diameter in the range of 100Å. At pH 12 and at 5°C the suspension is agitated for more than 30 minutes and then the temperature is increased to 90-100°C. This temperature is maintained for 60 more minutes.

In the suspension 100 ml of soap is added under a strong agitation. The soap composition is isostearic acid: AMMONIA (30%$NH_3$) solution in volume ratio of 1:1.

The suspension having above composition is mixed for 0 minutes at 90°-100°C; then 350 cc of an isoparoffinic hydrocarbon fraction (ISOPAR-G, having a boiling point range of 160 to 176°C of Exxon Chemical Co.) is added to the suspension under constant agitation.

After 60 minutes of strong agitation, all the magnetite particles, well covered with isostearic acid, are suspended in the hydrocarbon friction. The mixture was settled for 120 minutes. The upper layer contain the hydrocarbon base magnetic colloid. The supernatant liquid was transferred into another beaker. The hydrocarbon base magnetic colloid (300cc) was mixed with 200 cc of acetone. The magnetite was allowed to settle and the supernatant liquid was siphoned off.

This operation is repeated two more times in order to eliminate the excess of isostearic acid. The acetone wet slurry was added in a beaker containing 400 cc of heptane.

This slurry was heated to 80°C in order to remove the acetone. The remaining fluid is 450 cc heptane based magnetic colloid having approximately 400 gauss saturation magnetization.

A total of 55 gr of a polypropoxy quaternary ammonium acetate cationic surfactant (EMCOL cc 55, a polypropoxy quaternary ammonium acetate of Witco Chemical Co.) surfactant was added to the heptane base magnetic colloid at 70°C under constant stirring. After 30 minutes of agitation at this temperature the absorption of the second surfactant on the magnetic particles was considered complete. A total of 300 cc of liquid carrier of a polyolester (Mobil Ester P-42, having a pour point of -51°C, flash point 243° C, viscosity index 134 of Mobil Chemical Co.) was added under agitation to the heptane base magnetic colloid. The mixture was held at 100°C until all the heptane was removed.

The final ferrofluid was kept in a high magnetic field gradient at 80°C for 24 hours in order to remove large agglomerates. The supernatant fluid was filtered and the final magnetic colloid was 350 gauss in saturation magnetization and 60 cp in viscosity at 27°C. The large aggregates can also be separated by centrifugation in a field of 200-1000 g.

Example 3

Using an Acylated Polyamine Salts - Short Chain Carboxylic Acid

A 450 cc heptane base magnetic colloid with about 450 gauss saturation magnetization was prepared as described in Example 2.

A total of 60 gr of a cationic surfactant (an acrylated polyamine salt of short chain carboxylic acid having the

formula $[C_{17}H_{35}CONH(CH_2)_2HN(CH_3O_2]^+$ acetate) was added to the heptane base magnetic colloid at 70°C under constant stirring. After 30 minutes of agitation the absorption of the second surfactant on magnetic particles was considered complete. A total 300 cc of a polyalphaolefine oil (Mobil SMF 41, a polyalphaolefine oil pour point -68°C, flash point 218°C, viscosity of 120 of Mobil Chemical Co.) was added under agitation to the heptane based magnetic colloid. The mixture of these components was held at 110°C until all the heptane was evaporated.

The final ferrofluid was further treated as described in Example 2. The final magnetic colloid was 300 gauss in saturation magnetization 50 cp in viscosity at 27°C.

With reference now to the drawings, Fig. 1 illustrates a ferrofluid-film-bearing apparatus used with a computer-disc drive 10, which includes a magnetic head 12 placed in a close relationship with the surface of a computer disc 14, which is driven by a magnetically permeable shaft 16 and placed within a housing 18. A low-viscosity, electrically conductive ferrofluid, having a viscosity of about 15 cps at 27°C and 200 gauss, is shown as a ferrofluid bearing surrounding the shaft 16. A ferrofluid seal apparatus is shown at the top and bottom of the bearing assembly 10, wherein a ferrofluid O-ring seal 22 is formed about the rotating shaft 16 through the use of a pole piece 24, with a radial gap and electrically conductive ferrofluid in and under the gap to form an O-ring ferrofluid seal 22, and an annular magnet 26, to provide a magnetic-flux field, to retain the ferrofluid 22 in the radial gap. The bearing apparatus 10 also includes a thrust bearing 28 and an in-line motor 30 secured to the shaft, for rotation of the shaft with the computer disc 14.

As illustrated, the ferrofluid bearing apparatus does not contain an electrically conductive grounding button, which is placed in a tensional arrangement with the surface of the shaft, to conduct away accumulated static charges, but rather the bearing assembly employs a low-viscosity, electrically conductive ferrofluid in the bearing cavity about the shaft 16, and, optionally, nonelectrically conductive or electrically conductive ferrofluid to form an O-ring ferrofluid seal at the top of the bearing assembly, so as to provide a seal for the contamination-free area in which the magnetic head 12 operates. In the bearing apparatus illustrated in Fig. 1, any static charge accumulating across the magnetic head 12 and computer disc 14 is continuously conducted through the magnetically permeable rotating shaft 16, the ferrofluid in the radial gap 22, where the ferrofluid is electrically conductive, and the electrically conductive ferrofluid in the bearing cavity, through the housing and to the ground; therefore, eliminating the grounding button.

Fig. 2 shows a ferrofluid-film-bearing apparatus 40, having a magnetic head 42 in close proximity to the surface of a computer disc 44, which disc is secured to a magnetically permeable shaft 46 located within a bearing housing 48. An

electrically conductive or nonelectrically conductive, low-viscosity ferrofluid 50 is positioned in the bearing cavity within the housing. A dual pole-piece ferrofluid seal apparatus 52 is positioned at the top and the bottom of the housing, which seal apparatus comprises four pole pieces 54, with magnets 56 therebetween. The pole pieces extend into a close, noncontacting relationship with the surface of the shaft, to define a plurality of radial gaps which contain a low resistivity, electrically conductive ferrofluid compositions 62. The shaft 46 also includes upper and lower thrust bearings 58, while the shaft is rotated through an in-line motor 60.

The ferrofluid-film-bearing apparatus 40 illustrated may be employed with electrically conductive or electrically nonconductive ferrofluid as the bearing ferrofluid, and with additionally a low-resistivity, electrically conductive ferrofluid composition, to form the ferrofluid O-ring seals in the ferrofluid seal apparatus at the top and bottom of the housing. Any built-up static charge across the magnetic head 42 and the rotating disc 44 is conducted through the top and bottom conductive ferrofluid seal apparatusess 52, the stationary pole pieces 54 and the housing 48, in addition to the electrically conductive ferrofluid 62 in the radial gap between the shaft 46 and the housing 48; thus, avoiding the necessity to employ a separate grounding button. As illustrated, as a further reduction in the bearing apparatus, electrical resistance is accomplished by the use of two conventional electrically conductive ferrofluid seals at either end of the bearing cavity, with a typical resistance, for example, being 2 to 5 ohms, and with a bearing size of 0.450 inches.

Example 4

A low-viscosity, carbon-particle/cationic surfactant ferrofluid composition, used in the bearing assembly of Figs. 1 and 2, was prepared as follows:

The magnetite ($Fe_3O_4$) was prepared using 240 grams of Fe $SO_4$, 425 ml of 45% Fe $Cl_3$ and 250 ml of water. The mixture of these three components is maintained at 5°C under constant agitation, to ensure that the Fe $SO_4$ is completely dissolved.

$Fe_3O_4$ was precipitated from the solution by the slow addition of ammonia solution (30% $NH_3$), to reach the pH of 12. The solution must be cooled at 5°C during $Fe_3O_4$ precipitation, in order to obtain average magnetic particle diameter in the

range of 100 Angstroms. At pH 12 and at 5°C, the suspension is agitated for more than 30 minutes and then the temperature is increased to 90-100°C. This temperature is maintained for 60 more minutes.

In the suspension, 100 ml of soap is added under a strong agitation. The soap composition is isostearic acid: ammonia (30% $NH_3$) solution in volume ratio of 1:1.

The suspension having the above composition is mixed for 30 minutes at 90-100°C, and then 350 cc of an isoparoffinic hydrocarbon fraction (ISOPAR-G, having a boiling-point range of 160°C to 176°C of Exxon Chemical Co.) is added to the suspension under constant agitation.

After 60 minutes of strong agitation, all the magnetite particles, well covered with isostearic acid, are suspended in the hydrocarbon fraction. The mixture was settled for 120 minutes. The upper layer contains the hydrocarb base magnetic colloid. The supernatant liquid was transferred into another beaker. he hydrocarbon base magnetic colloid (300 cc) was mixed with 200 cc of acetone. The magnetite was allowed to settle and the supernatant liquid was siphoned off.

This operation is repeated two more times, in order to eliminate the excess of isostearic acid. The acetone wet slurry was added in a beaker containing 400 cc of heptane.

This slurry was heated to 80°C, in order to remove the acetone. The remaining fluid is 450 cc heptane-based magnetic colloid having approximately 400 gauss saturation magnetization.

A total of 55 gr of a polypropoxy quaternary ammonium chloride cationic surfactant (EMCOL cc 55, a polypropoxy quaternary ammonium acetate of Witco Chemical Co.) was added to the heptane-based magnetic colloid at 70°C under constant stirring. After 30 minutes of agitation at this temperature, the absorption of the second surfactant on the magnetic particles was considered complete. A total of 500 cc of liquid carrier of a polyol ester (Mobile Ester DB 32, having a pour point of -62°C, flash point 204°C, viscosity index 149 of Mobil Chemical Co.) was added under agitation to the heptane-based magnetic colloid. The mixture was held at 100°C until all the heptane was removed.

The final ferrofluid was kept in a high magnetic-field gradient at 80°C for 24 hours, in order to remove the large aggregates. The supernatant fluid was filtrated and mixed with carbon-black particles (CONDUCTEX 40-220, Columbia Chemicals Co.).

The constant of carbon black is 1% to 3% by weight, in order to provide a good dispersion of carbon black in ferrofluid. The mixing time is 2 hours at room temperature.

The final ferrofluid has 200 gauss in saturation magnetization and 15 to 20 cp viscosity at 27°C.

In both Figs. 1 and 2, the employment of a low-viscosity, ferrofluid electrically conductive composition of the example, either in the seals or in the bearing cavity, provides for elimination of the grounding button, and permits the bearing-seal composite apparatus merely to be secured to ground; thus, the eliminating the difficulties associated with prior-art apparatuses.

CLAIMS:

1. A stable ferrofluid composition which comprises:

a) an organic liquid carrier;

b) magnetic particles in an amount sufficient to provide magnetic properties to the ferrofluid composition; and

c) a dispersing agent in an amount sufficient to disperse and stabilize the magnetic particles in the organic liquid carrier, which dispersing agent comprises:

a cationic surfactant composed of a cationic positively charged portion and a long chain portion, the long chain portion being compatible with or soluble in the organic liquid carrier.

2. A method of preparing a stable ferrofluid composition, which method comprises dispersing magnetic particles in an organic liquid carrier by employing a dispersing amount of a cationic surfactant sufficient to provide a stable, dispersed ferrofluid composition, a portion of the cationic surfactant being soluble in the organic liquid carrier.

3. A method of providing a ferrofluid seal about a rotating member subject to the accumulation of static charges, which method comprises:

sealing the rotary member with an electrically conductive ferrofluid composition, which ferrofluid composition includes therein a dispersing and electrically conductive amount of a quaternary ammonium cationic surfactant to provide an electrically conductive path to ground for the electrically conductive ferrofluid composition.

4. A low-viscosity, electrically conductive ferrofluid for use in a ferrofluid hydrodynamic bearing apparatus, which ferrofluid composition comprises:

a) a non-volatile hydrocarbon or ester liquid carrier compound;

b) finely-divided ferromagnetic particles in an amount sufficient to impart magnetic properties to the liquid carrier;

c) up to 4% by weight of finely-divided carbon-black particles; and

d) a cationic surfactant composed of a quaternary-ammonium salt comprising a nitrogen-positive head portion and a long-tail portion, which long-tail portion is soluble in the liquid carrier, and which cationic surfactant is present in an amount which, in combination with the carbon particles, provides for a non-thixotropic ferrofluid composition, having an electrical resistivity of about $10^{+2}$ ohms or less, and a low-viscosity of about 25 cps at 25°C or less.

5. A low-viscosity, electrically conductive ferrofluid composition for use in ferrofluid hydrodynamic bearing and seal apparatuses, which composition comprises:

a) a liquid carrier;

b) ferromagnetic particles in an amount sufficient to impart magnetic properties to the ferrofluid composition; and

c) in combination finely-divided carbon particles and a cationic surfactant, the cationic surfactant present in an amount to provide for dispersion of the carbon particles and the magnetic particles in the liquid carrier, and in combination with the carbon particles present in an amount of up to about 4% by weight of the ferrofluid composition, to provide a low-viscosity, electrically conductive ferrofluid composition which has an electrical resistivity of about $10^2$ ohms or less, and a viscosity of about 50 cps at 27°C or less.

6. A ferrofluid bearing apparatus, which bearing apparatus comprises in combination:

a) a housing characterized by a shaft-receiving cavity therein and having a one and another end, and having a radial-bearing, inner wall surface;

b) a rotary shaft disposed for rotary movement within the shaft-receiving cavity, and defining with

the cavity a radial-bearing cavity;

c) thrust-bearing means to provide support for the longitudinal movement of the rotary shaft in the housing;

d) a ferrofluid-seal-apparatus means at the one or the other or both ends of the shaft-receiving cavity, to provide a ferrofluid O-ring-type seal about the surface of the rotary shaft;

e) an electrically conductive ferrofluid composition employed as the ferrofluid in the ferrofluid seal apparatus;

f) a low-viscosity, electrically conductive ferrofluid composition in the bearing cavity, the ferrofluid composition having a viscosity of less than about 50 cps at $27^{o}C$ and a resistivity of about $10^{2}$ ohms or less; and

g) means to ground the bearing apparatus, thereby providing an electrically conductive bearing apparatus which conducts accumulated electrical charges from the shaft to the ground, without the need for a mechanical grounding button in contact with the shaft.

7. The composition of claim 1 wherein the cationic surfactant is present in a ratio by weight of surfactant to magnetic particles from about 1:1 to 20:1.

8. The composition of claim 1 wherein the cationic surfactant comprises from about 4 to 25 moles of a polyalkoxylate portion, and wherein the organic liquid carrier comprises an ester, a glycol or an esterglycol.

9. The composition of claim 1 wherein the cationic surfactant comprises a quaternary ammonium cationic surfactant having a quaternary ammonium head portion of the molecule and a long chain tail portion of the molecule, the long chain tail portion of the molecule selected from the group consisting of: a long chain hydrocarbon; a long chain fatty acid; or a poly alkoxylated chain.

Claim 10. The composition of claim 1 wherein the cationic surfactant is selected from a group consisting from a fatty acid quaternary imidozoline salt; a polypropoxy quaternary ammonium salt; an acylated polyamine salt; or combinations thereof.

Claim 11 . The composition of claim 1 wherein the cationic surfactant comprises a quaternary ammonium cationic surfactant having the structural formula:

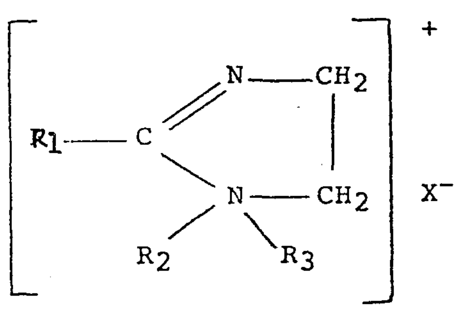

wherein $R_1$ is a long chain aliphatic radical; $R_2$ and $R_3$ are hydrogen or an alkyl; and $X^-$ is an anionic-salt radical, such as $C_1$-$C_4$ like methyl, or hydroxy $C_2$-$C_6$ alkyl like $-C_2H_4OH$ radicals.

Claim 12. The composition of claim 1 wherein the cationic surfactant comprises a quaternary ammonium surfactant having the structural formula:

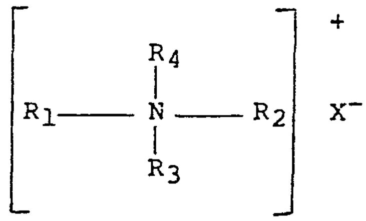

wherein $R_1$ is a long chain radical; $R_2$ and $R_3$ are poly alkoxy radicals, such as polyoxypropylenated radicals; and $R_4$ is a lower alkyl radical; and $X^-$ is an annoinic salt radical.

Claim 13. The composition of claim 1 wherein the cationic surfactant comprises a quaternary ammonium cationic surfactant having the structural formula:

$$\left[C_nH_{2n+1}CONH(CH_2)_3HN(CH_3)_2\right]^+ X^-$$

wherein n is a number from 1 to 20; and $X^-$ is an anionic salt radical.

Claim 14. The composition of claim 1 which includes a nonionic or anionic surfactant.

Claim 15. The composition of claim 1 which includes a first dispersing agent of a long chain acid anionic surfactant and a second dispersing agent of a cationic surfactant which comprises a quaternary ammonium surfactant having a tail portion soluble in the organic liquid carrier.

16. The composition of any preceding claim which includes a first layer of an anionic surfactant in the ferromagnetic particles and a second layer of the cationic surfactant.

17. The composition of any preceding claim wherein the organic liquid carrier comprises a hydrocarbon or polyalphaolefine oil, and wherein the long chain portion of the cationic surfactant comprises a $C_6$ to about $C_{30}$ hydrocarbon.

18. The composition of any of claims 7 to 16 wherein the organic liquid carrier is selected from the group consisting of liquid hydrocarbons, liquid esters, liquid glycols and silicone oils.

19. The composition of any of claims 7 to 18 wherein the magnetic particles comprise ferromagnetic particles having a diameter ranging from about 20 to 500 angstroms.

20. The composition of any of claims 7 to 18 wherein the magnetic particles comprise ferromagnetic particles having a diameter of from about 20 to 200 angstroms, and wherein the cationic surfactant has a long chain portion greater than about 15 angstroms.

21. The composition of claim 1 wherein the compositin has an electrical resistivity of about $10^6$ ohm-cm or less.

Claim 22. The method of claim 2 wherein the cationic surfactant comprises a quaternary ammonium cationic surfactant having a long chain hydrocarbon or alkyoxy group.

Claim 23. The method of claim 2 wherein the organic liquid character comprises a hydrocarbon or polyalphaolefine oil, and which method comprises: dispersing the magnetic particles in the organic liquid carrier in the presence of from about 5 to 25 percent by weight of the magnetic particles of an anionic surfactant to provide a first layer of surfactants, and thereafter dispersing the anionic surfactant containing magnetic particles in the organic liquid carrier employing a cationic surfactant, whereby the ratio by weight of the cationic surfactant to magnetic particles varies from about 1:1 to 40:1.

Claim 24. The method of claim 23 wherein the anionic surfactant has more than 8 carbon atoms and contains one or more polar groups.

Claim 25. The method of claim 2 wherein the cationic surfactant employed as the second layer surfactant in the method of dispersing and preparing the ferrofluid composition comprises: a quaternary ammonium cationic surfactant having a $C_6$-$C_{30}$ hydrocarbon or alkoxy tail portion.

Claim 26. The method of claim 2 wherein the cationic surfactant employed as a second layer surfactant has from about 5 to 25 moles of a polyoxyethoxylate tail portion, and wherein the organic liquid carrier comprises an ester or a glycol.

Claim 27. The method of claim 2 wherein the cationic surfactant is selected from a group consisting of: a fatty acid quaternary imizozoline salt; a polypropoxy quaternary ammonium salt; an acylated polyamine salt; or combinations thereof.

Claim 28. The method of claim 2 wherein the anionic surfactant comprises a long chain carboxylic acid anionic surfactant and wherein the cationic surfactant comprises a long chain quaternary ammonium surfactant.

Claim 29. The method of claim 28 wherein the cationic surfactant is selected from a group consisting of: a fatty acid quaternary imidozoline salt; a polypropoxy quaternary ammonium salt; an acylated polyamine salt; or combinations thereof.

30. A stable ferrofluid composition, which composition comprises:

a) an organic liquid carrier, which organic liquid carrier is selected from the group consisting of hydrocarbons, esters and glycols;

b) finely divided ferromagnetic particles in an amount to provide magnetic properties to the ferrofluid composition and having an average diameter ranging from about 20 to 300 angstroms; and

c) a dispersing agent in an amount sufficient to disperse and stabilize the magnetic particles in the organic liquid carrier, which dispersing agent comprises a quaternary ammonium surfactant selected from a group consisting of:

fatty quaternary imidozoline salts; polypropoxy quaternary ammonium salts; acylated polyamine salts; and combinations thereof.

31. The composition of claim 5 wherein the cationic surfactant comprises a quaternary ammonium surfactant.

32. The composition of claim 5 wherein the cationic surfactant comprises a quaternary ammonium surfactant compcund, having a nitrogen-positive head group and a long-tail portion which is soluble in the liquid carrier.

33. The composition of claim 1 or claim 31 or 32 wherein the carbon particles are present in an

amount of from about 2% to 4% by weight of the ferrofluid composition.

34. The composition of claim 1 or claim 31, 32 or 33, wherein the carbon particles are finely-divided carbon particles having a particle size of less than about 200 Angstroms, and wherein the carbon particles are carbon black derived from a furnace process.

35. The composition of claim 5 or any of claims 31 to 34 wherein the carrier comprises a non-volatile hydrocarbon or ester organic liquid-carrier material.

36. The composition of claim 5 or any of claims 31 to 35 wherein the ferrofluid composition has a viscosity of about 15 cps at 27°C or less.

37. The composition of claim 5 or any of claims 31 to 36 wherein the ratio of the magnetic particles to cationic surfactant ranges from about 0.5:1 to 20:1.

38. The bearing apparatus of claim 6 wherein the ferrofluid O-ring-type seal about the surface of the shaft element comprises an electrically conductive ferrofluid composition, and wherein the rotating shaft element and the housing are composed of electrically

conductive materials.

39. The bearing apparatus of claim 6 or 38, which bearing apparatus comprises a first thrust-bearing means at the one end and a second thrust-bearing means at the other end of the shaft-receiving cavity, and wherein the ferrofluid-seal-apparatus means comprises a first ferrofluid-seal-apparatus means at the one end and a second ferrofluid-seal-apparatus means at the other end of the shaft-receiving cavity, to seal the surface of the rotary shaft at the one and other ends of the shaft-receiving cavity.

40. The bearing apparatus of claim 6 or claim 38 or 39 wherein the ferrofluid composition, which forms the O-ring-type ferrofluid seal about the surface of the rotating shaft, is the same, low-viscosity, electrically conductive ferrofluid composition employed in the bearing cavity.

41. The bearing apparatus of claim 6 wherein the ferrofluid-seal-apparatus means comprises a single-stage ferrofluid-seal-apparatus means at the one and other ends of the shaft-receiving cavity, which ferrofluid-seal-apparatus means comprises an annular permanent magnet and a single pole piece, one end of the pole piece defining a radial gap about the surface of the shaft apparatus, and ferrofluid disposed in the radial gap, to form the ferrofluid seal at both the one and the other ends.

42. The bearing apparatus of claim 6 wherein the ferrofluid-seal-apparatus means comprises a first sealing means at the one end and a second sealing means at the other end of the shaft-receiving cavity, each of the ferrofluid sealing means comprising dual pole pieces and an annular magnet, the dual pole pieces forming radial gaps at the one end thereof with the surface of the rotating shaft, and a dual-stage ferrofluid seal about the surface of the shaft at the one first and the other second ferrofluid sealing means.

43. A computer-disc-drive system which comprises: the bearing apparatus of claim 6 or any one of claims 38 to 42; a computer disc secured to the rotating shaft for rotation therewith; a magnetic head means to receive or impart information to the computer disc; and a motor means to provide for the rotary motion of the rotary shaft.

Claim 44. A computer-disc-drive system, which computer-disc-drive system comprises in combination:

a) a magnetic head means to receive or impart information from or to a computer disc;

b) a computer disc;

c) a magnetically permeable rotary-shaft element, the computer disc secured to one end of the shaft for rotation therewith;

d) a housing characterized by a shaft-receiving cavity and an internal wall surface, to define a bearing cavity, the shaft-receiving cavity having a one end and another end;

e) an electrically conductive, low-viscosity ferrofluid composition disposed in the bearing cavity;

f) a ferrofluid-seal-apparatus means at the one and the other ends of the shaft-receiving cavity, to define a ferrofluid O-ring-type seals about the surface of the rotary-shaft element;

g) thrust-bearing means at the one and the other ends of the shaft-receiving cavity, to provide for support of the longitudinal movement of the rotary-shaft element;

h) a motor means to impart rotary motion to the shaft element and the computer disc; and

i) means to ground the housing, so that accumulated static charges across the magnetic head means and the computer disc may be conducted through the rotating shaft element and the housing to ground, the ferrofluid in the bearing cavity having a viscosity of less than about 25 cps at 27°C, and having a resistance of less than about 50 ohms.

Claim 45. The computer-disc-drive system of claim 44 wherein the ferrofluid employed as the ferrofluid O-ring-type seal about the rotating shaft comprises a low-viscosity, electrically conductive ferrofluid having a resistivity of about $10^2$ ohms or less and a viscosity of about 50 cps or less.

0206516

1/1

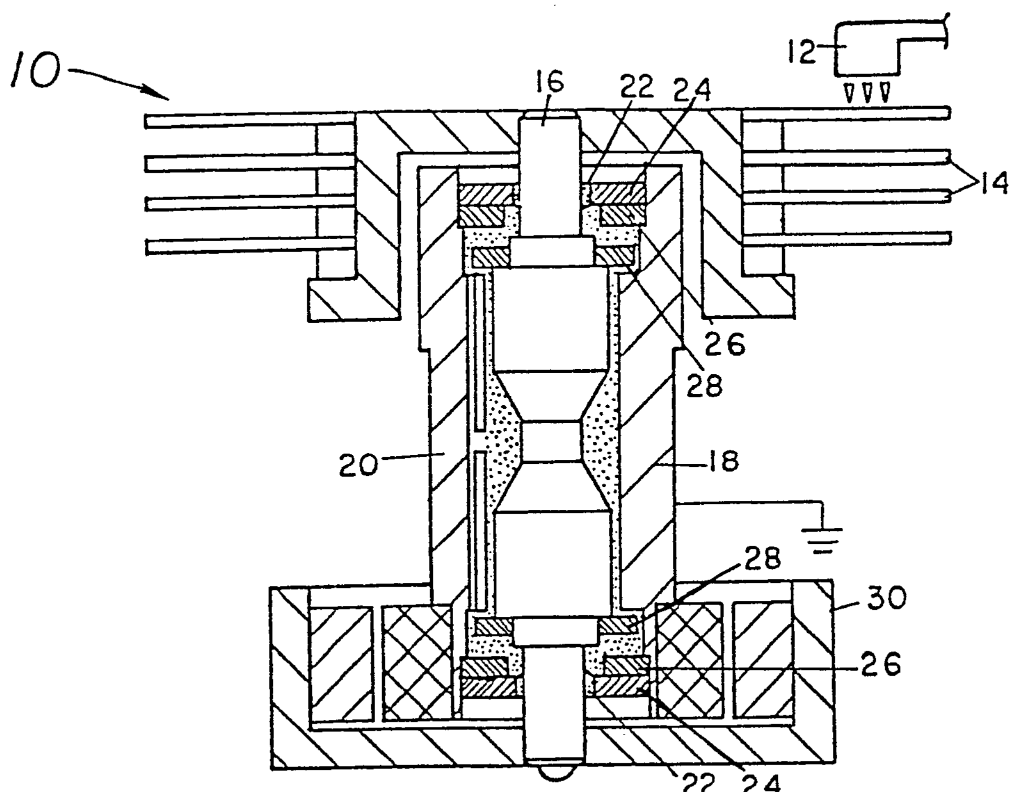


FIG. 1

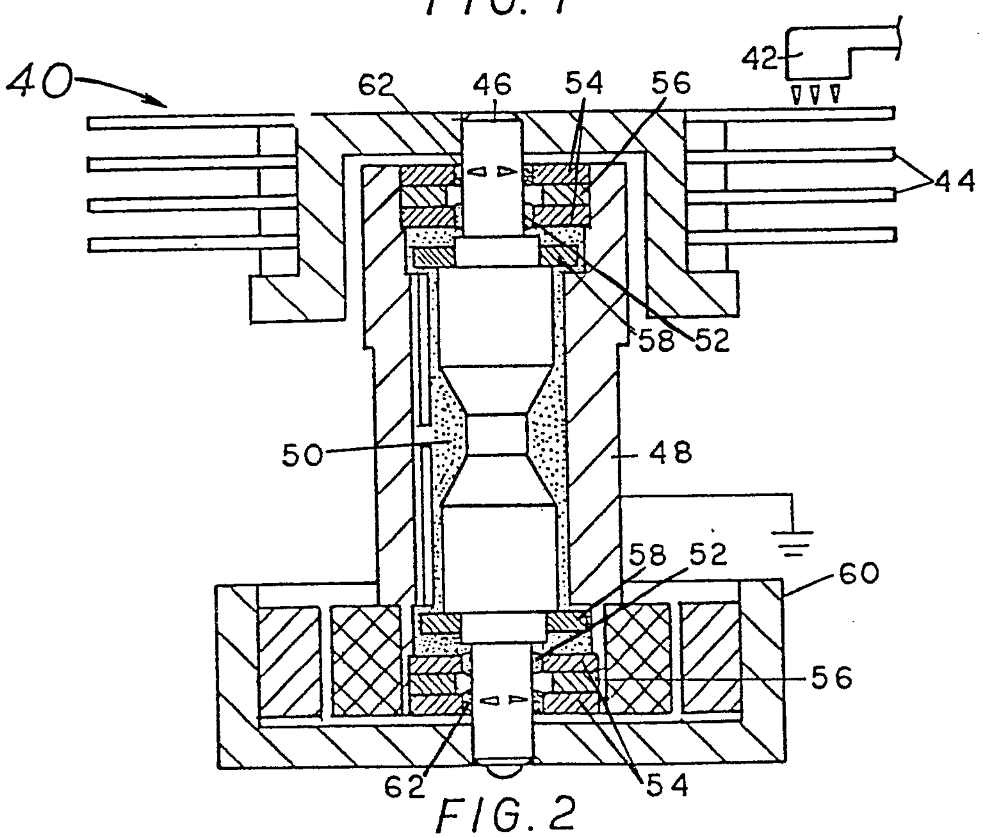


FIG. 2